# EUROPÄISCHE PATENTANMELDUNG

(11) **EP 4 674 577 A1**
(43) Veröffentlichungstag der Anmeldung: **07.01.2026**
(21) Anmeldenummer: 25186513.5
(22) Anmeldetag: 01.07.2025
(51) Int. Cl.: B25J 9/16

(54) **VERFAHREN UND SYSTEM ZUR BEARBEITUNG DER OBERFLÄCHE EINES BAUTEILS**

(30) Priorität: 02.07.2024 DE 102024118787
(71) Anmelder: Fraunhofer-Gesellschaft zur Förderung der angewandten Forschung e.V., 80686 München (DE)
(72) Erfinder: Knuth, Martin, 63500 Seligenstadt (DE); Ritz, Martin, 64405 Fischbachtal (DE)
(74) Vertreter: Ramrath, Lukas

(57) **Zusammenfassung**

Die Erfindung betrifft ein Verfahren und ein System (1) zur Bearbeitung der Oberfläche eines Bauteils (2), umfassend die Schritte:
a. dreidimensionale Erfassung einer Geometrie des Bauteils (2),
b. Bereitstellen einer virtuellen Umgebung, in der zumindest eine Positioniereinrichtung (8, 16) für ein Werkzeug (9) zur Bearbeitung der Oberfläche oder für das Bauteil (2), das Werkzeug (9) und das Bauteil (2) in virtueller Form repräsentiert sind,
c. Planung zumindest einer virtuellen Trajektorie (11) des Werkzeugs (9) relativ zum Bauteil (2) in der virtuellen Umgebung,
d. Übertragen von Informationen über die virtuelle Trajektorie (11) an eine Steuereinrichtung (13) der zumindest einen Positioniereinrichtung (8, 16),
e. Steuern der zumindest einen Positioniereinrichtung (8, 16) entsprechend den Informationen über die virtuelle Trajektorie (11) zur Bearbeitung der Oberfläche des Bauteils (2).

## Beschreibung

Die Erfindung betrifft ein Verfahren und ein System zur Bearbeitung der Oberfläche eines Bauteils.

Aus dem Stand der Technik bekannt ist die autonome, insbesondere robotergestützte, Bearbeitung von Oberflächen von Bauteilen, deren Geometrie nicht vorab bekannt ist. Hierbei existiert generell die Herausforderung, dass eine vorab nicht bekannte Bauteiloberfläche unter Einhaltung von Wirkparametern mittels eines Werkzeugs bearbeitet werden soll, wobei die Bearbeitung insbesondere autonom, also unbeaufsichtigt, erfolgen soll.

Eine solche Bearbeitung ist z.B. bei radioaktiv kontaminierten Bauteilen interessant, insbesondere um diese durch die Bearbeitung zu dekontaminieren. So kann es in kerntechnischen Anlagen zu einer Oberflächenkontamination von Bauteilen kommen, wobei die Oberfläche dieser Bauteile, aber auch oberflächennahe Schichten der Bauteile wie z.B. eine Lackschicht oder Oxidschicht, kontaminiert werden. Beim Rückbau einer solchen Anlage kann es dann erforderlich sein, dass das Bauteil oberflächenbehandelt wird, um es zu dekontaminieren. Bekannt ist beispielsweise eine Wasserstrahlbehandlung zur Dekontaminierung, bei der die Oberfläche mit einem Wasserstrahl von hohem Druck beaufschlagt wird, wodurch diese gereinigt und/oder abgetragen wird. Die WO 2023/198613 A1 beschreibt ein entsprechendes Verfahren zum Behandeln einer Oberfläche eines radioaktiv kontaminierten Bauteils, bei dem die Oberfläche des Bauteils autonom vermessen wird, sodass beliebig geformte Bauteile einer Behandlung unterzogen werden können, ohne dass eine manuelle Behandlung notwendig ist. Die Druckschrift beschreibt ein autonomes Festlegen eines Betätigungsweges für eine an einem Werkzeugkopf des Roboterarms befestigte Wasserstrahldüseneinheit. Problematisch hierbei ist, dass die autonome Festlegung des Betätigungswegs zeitintensiv ist, insbesondere wenn Kollisionen vermieden werden sollen.

Auch bekannt ist eine manuell durchgeführte Oberflächenbehandlung, insbesondere zur Dekontamination. Hierzu kann eine Person, die mit Schutzausrüstung ausgestattet sein kann, die Behandlung durchführen. Dies ist in der Regel nicht effizient, anstrengend und unter Umständen auch für die Person gefährdend.

Zur Dekontamination von Oberflächen ist auch die Anwendung sogenannter chemischer Bäder bekannt, die aber unter Umständen gesundheitsschädlich sein können und nicht in zuverlässiger Weise sich alle Kontaminationsarten zuverlässig reinigen lassen, insbesondere bei dicken Lackschichten. Ferner ergibt sich die Gefahr einer Umweltschädlichkeit, insbesondere wenn viele Chemikalien erforderlich sind.

Weiter bekannt sind sandstrahlbasierte Verfahren, wobei das Bauteil in einer Kabine platziert wird und dann mit Sand bestrahlt wird. Hierbei ergibt sich in nachteiliger Weise ein kontaminiertes Strahlmedium, was dann entsprechend entsorgt werden muss.

Die DE 10 2015 000 500 A1 beschreibt ein Verfahren zur Dekontamination von radioaktiv kontaminierten Werkstücken. Hierin ist offenbart, dass ein Reinigungsroboter vorgesehen sein kann, der gemäß von Steuerparametern automatisch eine Reinigung durchführen kann.

Auch die DE 20 2014 001 542 U1 beschreibt eine Vorrichtung zur Dekontamination.

Die DE 10 2019 001 207 A1 betrifft einen kollaborativen Roboter und ein Verfahren zum Betreiben eines kollaborativen Roboters zum Bearbeiten eines Werkstücks. In der Druckschrift beschrieben ist ein Lernmodus und ein Arbeitsmodus, wobei der kollaborative Roboter dazu konfiguriert ist, im Lernmodus eine Arbeitsbewegung des Roboterwerkzeugs zum Bearbeiten des Werkstücks zu erlernen. Dieses Verfahren ist jedoch in der Regel nur für eine Mehrzahl von identischen oder gleichartigen Bauteilen anwendbar.

Die AU 2021 204 215 A1 beschreibt die Analyse einer Oberflächenabdeckung von einem Arbeitsraum eines robotischen Geräts.

Die US 2021/287554 A1 betrifft eine Trajektorienklassifikation.

Die US 2021107156 A1 beschreibt einen Roboter und eine Steuerungsmethode.

Die DE 10 2015 205 631 A1 offenbart ein Verfahren zum automatisierten Bedrucken einer gekrümmten Oberfläche.

Die US 2021/349469 A1 offenbart das Kartografieren einer Umgebung mit einem robotischen Gerät.

Es stellt sich das technische Problem, ein Verfahren und ein System zur Bearbeitung der Oberfläche eines Bauteils zu schaffen, die eine zuverlässige robotergestützte und insbesondere automatisierte Oberflächenbehandlung ermöglichen.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zur Bearbeitung der Oberfläche eines Bauteils. Die Bearbeitung kann eine urformende Bearbeitung, eine umformende Bearbeitung, eine trennende Bearbeitung, eine fügende Bearbeitung, eine beschichtende Bearbeitung, eine die Stoffeigenschaften ändernde Bearbeitung oder eine Kombination von mindestens zwei der genannten Bearbeitungsarten sein. Die Bearbeitung kann mit einem Werkzeug durchgeführt werden. Ein solches Werkzeug kann beispielsweise ein Bohrer, ein Fräser, ein Entgratungswerkzeug, ein Lackierwerkzeug, ein Beschichtungswerkzeug, ein Reinigungswerkzeug, ein (Hoch)Druckreinigungswerkzeug oder ein anderes Werkzeug zur Durchführung der gewünschten Bearbeitungsart sein. Insbesondere, aber nicht ausschließlich, kann das Werkzeug ein Wasserstrahl-Werkzeug oder ein Laserablations-Werkzeug sein, wobei mit diesen Werkzeugen insbesondere eine umformende oder trennende Bearbeitung der Oberfläche erfolgen kann. Wie einleitend bereits beschrieben kann das Bearbeiten der Oberfläche des Bauteils erfolgen, um das Bauteil zu dekontaminieren, nämlich durch Abtragen und/oder Reinigen der Oberfläche bzw. einer die Oberfläche bildenden Schicht, insbesondere mit einer vorbestimmten Schichtdicke. Die Erfindung ist aber nicht auf eine solche Bearbeitungsart eingeschränkt, sondern kann auch eine Bearbeitung gemäß einer anderen Bearbeitungsart betreffen, z.B. zum Lackieren, Entgraten, Bedrucken, Einfärben, Beschichten und/oder Reinigen der Oberfläche dienen.

Das vorgeschlagene Verfahren umfasst mindestens folgende Schritte:
In einem (ersten) Erfassungsschritt wird eine Geometrie des Bauteils dreidimensional erfasst. Mit anderen Worten erfolgt eine dreidimensionale Erfassung der Geometrie des Bauteils. Insbesondere können hierbei geometrische Informationen des Bauteils, z.B. Dimensionen (Länge, Breite, Höhe), die geometrische Ausbildung etc., erfasst werden. Dieser Erfassungsschritt kann auch als Groberfassungsschritt bezeichnet werden.

Durch die dreidimensionale Erfassung kann eine virtuelle Repräsentation des Bauteils erzeugt werden, wobei diese beispielsweise in Form von Daten bereitgestellt werden kann, die die Geometrie des Bauteils kodieren bzw. repräsentieren. Vorzugsweise kann eine solche Repräsentation in Form einer 3D-Punktewolke erzeugt werden. Die Punkte einer solchen 3D-Punktewolke können z.B. Punkte der Oberfläche(n) des Bauteils repräsentieren.

Auch kann eine solche Repräsentation eine voxelbasierte Repräsentation sein. Voxel einer voxelbasierten Repräsentation können Objektvoxel sein, die einen (Oberflächen)-Abschnitt des Objekts repräsentieren. In einer solchen voxelbasierten Repräsentation können aber auch Umgebungsvoxel vorhanden sein, die nicht zum Bauteil gehörende Abschnitte der Umgebung repräsentieren. Aber auch andere Repräsentationen der Geometrie sind vorstellbar, beispielsweise mesh-basierte Repräsentationen.

Die Erfassung kann in Bezug auf ein Referenzkoordinatensystem erfolgen. Dieses kann ein vorbestimmtes Koordinatensystem sein, insbesondere ein globales Referenzkoordinatensystem.

Die dreidimensionale Erfassung kann mit mindestens einer Erfassungseinrichtung erfolgen. Es ist vorstellbar, dass die Erfassung in berührender Art und Weise erfolgt, beispielsweise mit einem taktilen Koordinatenmessgerät. Vorzugsweise erfolgt die Erfassung jedoch in nicht berührender Art und Weise, beispielsweise mit einem optischen Koordinatenmessgerät. Insbesondere kann also eine optische Erfassungseinrichtung für die dreidimensionale Erfassung eingesetzt werden. Eine solche optische Erfassungseinrichtung kann insbesondere ein Laserscanner sein. Die optische Erfassungseinrichtung kann hierbei beispielsweise ein Triangulations-Sensor sein. Selbstverständlich sind jedoch auch andere optische Erfassungseinrichtungen einsetzbar, z.B. optische Abstandssensoren.

Die Erfassungseinrichtung kann an einem Endeffektor einer Positioniereinrichtung angeordnet sein oder den Endeffektor bilden. Die Positioniereinrichtung kann insbesondere eine Positioniereinrichtung für das Werkzeug oder für das Bauteil sein, wobei mit der Positioniereinrichtung eine Raumlage des Endeffektors, insbesondere im vorhergehend erläuterten Referenzkoordinatensystem, verstellbar ist. Es ist jedoch auch vorstellbar, dass die Positioniereinrichtung zur Positionierung der Erfassungseinrichtung von der Positioniereinrichtung für das Werkzeug oder für das Bauteil verschieden ist. Selbstverständlich ist es auch vorstellbar, dass die Erfassungseinrichtung ortsfest, insbesondere in Bezug auf das Referenzkoordinatensystem, angeordnet ist.

Generell ermöglicht eine Positioniereinrichtung eine Positionierung eines Endeffektors im Raum, insbesondere derart, dass der Endeffektor eine vorbestimmte Soll-Pose einnimmt oder eine eingestellte Ist-Pose nicht mehr als ein vorbestimmtes Maß von der Soll-Pose abweicht. Wie die Erfassungseinrichtung kann das erläuterte Werkzeug an einem Endeffektor einer Positioniereinrichtung angeordnet sein oder den Endeffektor bilden. Auch kann eine Halterung für das Bauteil an einem Endeffektor einer (weiteren) Positioniereinrichtung angeordnet sein oder einen solchen Endeffektor bilden.

Eine Positioniereinrichtung kann hierbei mindestens ein Gelenk umfassen, wobei über eine Gelenkstellungsänderung eine Relativlage von zwei über das Gelenk verbundenen Elementen der Positioniereinrichtung verändert werden kann. Ein solches Gelenk kann insbesondere ein Drehgelenk oder ein Lineargelenk sein. Vorzugsweise umfasst eine Positioniereinrichtung mehr als ein Gelenk, insbesondere 6, 7 oder sogar mehr als 7 Gelenke. Die Positioniereinrichtung kann insbesondere als Gelenkarmroboter ausgebildet sein oder einen solchen umfassen. Die Positioniereinrichtung kann die Pose des Endeffektors mit einer vorbestimmten Anzahl von Freiheitsgraden, insbesondere mit 6, 7 oder mehr als 7 Freiheitsgraden, einstellen. Insbesondere umfassen diese Freiheitsgrade drei Translationsfreiheitsgrade und drei Rotationsfreiheitsgrade, insbesondere in Bezug auf das vorhergehend erläuterte Referenzkoordinatensystem. Durch Auswertung eines kinematischen Modells der Positioniereinrichtung kann eine Pose des Endeffektors in Abhängigkeit von einer Gelenkstellung des mindestens einen Gelenks bestimmt werden. Dies kann auch als Vorwärtsrechnung bezeichnet werden. Auch kann die mindestens eine Gelenkstellung in Abhängigkeit einer (Soll-) Pose des Endeffektors in Abhängigkeit des kinematischen Modells bestimmt werden. Dies kann auch als Rückwärtsrechnung bezeichnet werden.

Die Erfassung kann hierbei mit einer vorbestimmten geometrischen Auflösung erfolgen, diese ist definiert als theoretischer euklidischer Abstand der Messpunkte in der Messebene. Diese kann beispielsweise in einem Bereich von 0,1 mm bis 10 mm liegen. Die geometrische Auflösung kann werkzeugabhängig gewählt werden, wobei z.B. bei Verwendung einer Wasserstrahldüse eine Auflösung von mindestens 10 mm, bei Verwendung eines Laserablationswerkzeugs eine Auflösung von mindestens 3 mm, und bei der Verwendung eines kontaktierenden bzw. spanenden Werkzeugs eine Auflösung von mindestens 0,1 mm gewählt wird. "Mindestens" bedeutet hier "besser als oder gleich", also weniger als oder gleich wie der angegebene theoretisch erreichbare Mindest-Messpunktabstand.

Die dreidimensionale Erfassung kann erfolgen, indem eine Erfassungseinrichtung in einem vorbestimmten Abstand von einem Referenzhüllvolumen des Bauteils relativ zu diesem Referenzhüllvolumen bewegt wird. Das Referenzhüllvolumen kann aus einer Menge vorbestimmter Referenzhüllvolumina gewählt sein, insbesondere derart, dass das Bauteil vollständig innerhalb des Referenzhüllvolumens angeordnet ist. Das Referenzhüllvolumen kann insbesondere ein zylinderförmiges Volumen sein. Ist das Bauteil an einer Positioniereinrichtung für das Bauteil befestigt, z.B. auf einer Oberfläche eines Drehtischs angeordnet, so kann das Referenzhüllvolumen derart gewählt sein, dass es die Positioniereinrichtung für das Bauteil umfasst und/oder ortsfest relativ zu dieser Positioniereinrichtung angeordnet ist und/oder alle durch die Positioniereinrichtung für das Bauteil einstellbaren Posen des Bauteils umfasst. Der vorbestimmte Abstand kann insbesondere ein Abstand größer als Null sein. Somit ergibt sich in vorteilhafter Weise eine einfache, aber zuverlässige und insbesondere kollisionsfreie Erfassung des Bauteils, insbesondere eine einfache Bestimmung einer Trajektorie der Erfassungseinrichtung zur Erfassung. Ist die Erfassung eine optische Erfassung mit einer optischen Erfassungseinrichtung, die eine Fokusposition aufweist, so kann die Erfassung derart durchgeführt werden, dass eine Fokuslage relativ zur Erfassungseinrichtung während der Bewegung relativ zum Referenzhüllvolumen konstant ist. Hierbei wird also eine Fokuslage während der Bewegung nicht geändert. Dies kann dazu führen, dass bei der Erfassung auch Außer-Fokus-Abschnitte des Bauteils erfasst werden. Solche Abschnitte sind um mehr als ein vorbestimmtes Maß von der Fokusposition beabstandet, insbesondere entlang einer optischen Achse der Erfassungseinrichtung. Da jedoch die Geometrieerfassung keine Erfassung mit einer vergleichsweise hohen Auflösung sein muss, ergibt sich in vorteilhafter Weise eine schnelle Erfassung, da keine Anpassung der Fokuslage bei der Erfassung der Geometrie erfolgen muss.

Zusammenfassend kann mit der dreidimensionalen Erfassung ein volumetrisches 3D-Modell des Bauteils erzeugt werden. Das volumetrische 3D-Modell kann hierbei insbesondere Informationen über eine Oberflächengeometrie des Bauteils bereitstellen, insbesondere über eine Position und/oder Orientierung von Oberflächenabschnitten des Bauteils. Eine Position und/oder Orientierung wird nachfolgend auch als Pose bezeichnet. Das volumetrische Modell kann auch gespeichert werden, insbesondere zu Dokumentationszwecken.

In einem Bereitstellungsschritt wird eine virtuelle Umgebung bereitgestellt, in der zumindest eine Positioniereinrichtung für ein Werkzeug zur Bearbeitung der Oberfläche oder für das Bauteil, das Werkzeug und das Bauteil in virtueller Form repräsentiert sind. Die virtuelle Umgebung kann computerimplementiert bereitgestellt und auch als digitaler Zwilling bezeichnet werden. Hierzu kann mindestens eine Recheneinrichtung die Rechenoperationen zur Bereitstellung der virtuellen Umgebung durchführen. Eine solche Recheneinrichtung kann einen Mikrocontroller oder eine integrierte Schaltung umfassen bzw. als solche(r) ausgebildet sein. Das Bereitstellen der virtuellen Umgebung erfolgt somit unter Berücksichtigung der virtuellen Repräsentation, die im Erfassungsschritt erzeugt wurde. Ebenfalls erfolgt die Bereitstellung unter Berücksichtigung einer virtuellen Repräsentation des Werkzeugs und der Positioniereinrichtung. Diese virtuellen Repräsentationen können vorbekannt und insbesondere in einem vorab durchgeführten Modellierungsschritt erzeugt worden sein. Ein Referenzkoordinatensystem der virtuellen Umgebung kann das vorhergehend erläuterte Referenzkoordinatensystem sein. Auch kann ein Koordinatensystem der virtuellen Umgebung einen vorbekannten Bezug zu dem Referenzkoordinatensystem aufweisen. Mit anderen Worten können die virtuelle Umgebung und das Referenzkoordinatensystem registriert sein. Die virtuelle Umgebung ermöglicht eine volumetrische Repräsentation der Positioniereinrichtung des Werkzeugs, des Werkzeugs und des Bauteils.

Die repräsentierte Positioniereinrichtung kann zur Einstellung einer relativen Pose zwischen Werkzeug und Bauteil dienen und vorzugsweise eine Positioniereinrichtung für das Werkzeug, aber auch eine Positioniereinrichtung für das Bauteil sein. Zusätzlich kann in der virtuellen Umgebung auch eine weitere Positioniereinrichtung repräsentiert sein. So können in der virtuellen Umgebung insbesondere sowohl eine Positioniereinrichtung für das Bauteil als auch eine Positioniereinrichtung für das Werkzeug repräsentiert sein.

Alternativ oder kumulativ kann in der virtuellen Umgebung mindestens ein Zusatzobjekt, insbesondere in einem Arbeitsraum der mindestens einen Positioniereinrichtung, repräsentiert sein. Ein solches Zusatzobjekt kann beispielsweise die vorhergehend erläuterte Erfassungseinrichtung sein. Die virtuelle Repräsentation eines solchen Zusatzobjektes kann vorbekannt sein oder aber auf Basis einer Erfassung, z.B. durch die vorgenannte Erfassungseinrichtung oder eine weitere Erfassungseinrichtung, erzeugt werden.

Die virtuelle Repräsentation der Positioniereinrichtung kann hierbei neben den beweglichen Elementen, die über (ein) Gelenk(e) miteinander verbunden sind, auch weitere Bestandteile der Positioniereinrichtung oder an der Positioniereinrichtung angeordnete Elemente umfassen. Insbesondere können periphere Elemente der Positioniereinrichtung Bestandteil der Repräsentation sein. Solche peripheren Elemente können beispielsweise ein Kabel, insbesondere eine elektrische Leitung, oder ein Schlauch sein.

Mit anderen Worten können in der virtuellen Umgebung Informationen über Objekte zumindest im Arbeitsraum der Positioniereinrichtung und gegebenenfalls weitere Umgebungsinformationen repräsentiert werden.

Durch Auswertung der virtuellen Umgebung kann insbesondere für jeden Punkt der virtuellen Umgebung bestimmt werden, ob dieser Punkt ein Objektpunkt oder ein Umgebungspunkt ist. Hierbei bezeichnet ein Objektpunkt einen Punkt, der ein in der virtuellen Umgebung repräsentiertes Objekt repräsentiert, also einen Punkt auf einer Oberfläche des Objekts oder einen Punkt im Objekt. Ein Umgebungspunkt bezeichnet einen Punkt, der einen nicht zu einem Objekt gehörenden Punkt repräsentiert. Die virtuelle Umgebung kann insbesondere voxelbasiert bereitgestellt werden, wobei dann Objektvoxel Raumabschnitte repräsentieren, die von einem Objekt belegt, und Umgebungsvoxel Raumabschnitte repräsentieren, die nicht von einem Objekt belegt sind. Eine voxelbasierte Repräsentation kann eine diskrete Repräsentation eines dreidimensionalen Raums sein, wobei dieser in eine Anzahl von Voxeln aufgeteilt ist.

Die voxelbasierte Repräsentation kann eine vorbestimmte Auflösung aufweisen. Diese kann raumrichtungsabhängig und durch das Verhältnis einer Anzahl von Voxeln entlang einer Raumrichtung zu einer geometrischen Dimension des durch die Repräsentation abgebildeten Raumes entlang dieser Raumrichtung gegeben sein. Diese Auflösung kann abhängig von der vorhergehend erläuterten geometrischen Auflösung der Erfassung entlang dieser Raumrichtung sein. Vorzugsweise sollte die Auflösung der Erfassung mindestens doppelt so hoch sein wie die Auflösung der voxelbasierten Repräsentation.

Die virtuelle Umgebung ermöglicht die erläuterte Auswertung insbesondere für verschiedene Gelenkstellungen der repräsentierten Positioniereinrichtung(en) und somit eine Kollisionserkennung bei einer virtuellen Bahnplanung. Hierzu kann z.B. die vorhergehend erläuterte Recheneinrichtung oder eine weitere Recheneinrichtung Rechenoperationen durchführen, um für (eine) Gelenkstellung(en) die erläuterten Objektpunkte/-voxel und Umgebungspunkte/-voxel zu bestimmen. So kann die Recheneinrichtung die vorher erläuterte Vorwärts- und Rückwärtsrechnung durchführen.

Diese Bestimmung kann unter Berücksichtigung des erläuterten kinematischen Modells der Positioniereinrichtung(en) durchgeführt werden. Auch kann bestimmt werden, ob ein Punkt bzw. ein Voxel der virtuellen Umgebung bei einer bestimmten Gelenkstellung ein Oberflächenpunkt/-abschnitt eines Objekts repräsentiert.

In einem Planungsschritt wird zumindest eine virtuelle Trajektorie des Werkzeugs relativ zum Bauteil in der virtuellen Umgebung geplant. Es kann also eine virtuelle Trajektorie des Werkzeugs und/oder eine virtuelle Trajektorie des Bauteils bestimmt werden. Diese Planung kann eine Bestimmung der virtuellen Trajektorie bezeichnen und computerimplementiert erfolgen. Die virtuelle Trajektorie repräsentiert eine Bahnkurve, entlang derer sich das Werkzeug und/oder das Bauteil in der virtuellen Umgebung bewegen. Neben einer Position kann hierbei auch die Orientierung durch die Trajektorieninformationen repräsentiert werden. Die Posen der virtuellen Trajektorie können hierbei durch die Positioniereinrichtung(en) eingestellt werden und somit derart bestimmt werden, dass diese durch Positioniereinrichtung(en) einstellbar sind.

Die virtuelle Trajektorie kann neben den Informationen der entlang der Trajektorie einzustellenden Pose auch Zeitinformationen umfassen, insbesondere Informationen über einen Zeitpunkt oder eine Zeitpunktfolge, an dem die entsprechende Pose einzustellen ist.

Mit anderen Worten kann eine Trajektorie eine gegebenenfalls zeitlich sortierte Sequenz von Posen des Werkzeugs und/oder des Bauteils bezeichnen.

Auch kann die virtuelle Trajektorie Informationen über einzustellende Wirkparameter des Werkzeugs umfassen. Ein Wirkparameter kann eine vom Werkzeug auf die Oberfläche ausgeübte Wirkung während der Bearbeitung repräsentieren. Ein beispielhafter Wirkparameter kann ein Entschichtungsabtrag sein, der eine Menge, ein Volumen oder eine Dicke des abgetragenen Objektmaterials, insbesondere während einer vorbestimmten Zeitdauer, repräsentiert. Ein weiterer Wirkparameter kann eine Bearbeitungsdimension sein, beispielsweise eine Bearbeitungsbreite oder Bearbeitungstiefe, welche Eigenschaften einer Bearbeitungsfläche sein können. Die Bearbeitungsfläche, die ebenfalls ein Wirkparameter sein kann, kann einen Flächenabschnitt bezeichnen, in dem die Bearbeitung mit vorbestimmten Eigenschaften, insbesondere Wirkparametern, erfolgt.

Die Planung kann unter Berücksichtigung von mindestens einem vorgegebenen Wirkparameter oder Wirkparameterbereich erfolgen. Auch kann die Planung unter Berücksichtigung von mindestens einer Zwischengröße erfolgen, wobei sich ein Wirkparameter in Abhängigkeit mindestens einer Zwischengröße bestimmen lässt (und umgekehrt). Eine solche Zwischengröße kann beispielsweise ein Abstand zwischen dem Werkzeug und der Oberfläche sein. Eine weitere Zwischengröße kann eine Geschwindigkeit der Relativbewegung zwischen Werkzeug und Bauteil sein. Eine weitere Zwischengröße kann eine relative Orientierung zwischen dem Werkzeug und der zu bearbeitenden Oberfläche sein, die auch als Bearbeitungs- oder Angriffswinkel bezeichnet werden kann.

Zwischen der mindestens einen Zwischengröße und dem Wirkparameter kann ein vorbekannter, insbesondere funktionaler oder in Form einer Kennlinie oder in Form eines Kennfelds gegebener, Zusammenhang bestehen. Dieser Zusammenhang kann werkzeugspezifisch sein, insbesondere abhängig von aktuellen Werkzeugeigenschaften. Solche Werkzeugeigenschaften können einstellbare Werkzeugeigenschaften sein, die sich z.B. aus eingestellten Betriebsparametern des Werkzeugs ergeben. Im Fall einer Wasserstrahldüse kann ein eingestellter Betriebsparameter beispielsweise ein Wasserdruck sein. Bei einem Laserablations-Werkzeug kann ein Betriebsparameter beispielsweise eine Laserintensität sein. Eine Werkzeugeigenschaft kann aber auch eine nicht einstellbare Eigenschaft wie z.B. ein Abnutzungsgrad sein. Im Falle einer Wasserstrahldüse kann eine solche Werkzeugeigenschaft z.B. ein Düsentyp und/oder Anstellwinkel und/oder der Anordnung von einzelnen Düsen und/oder einer Zahl des Düsenkopfes sein. Im Falle eines Laserablations-Werkzeugs kann eine solche Werkzeugeigenschaft eine Eigenschaft eines optischen Systems sein.

Insbesondere kann die virtuelle Trajektorie derart geplant werden, dass der/die Wirkparameter entlang der Trajektorie einen vorbestimmten Wert aufweisen oder in einem vorbestimmten Werteintervall liegen. Aufgrund des erläuterten Zusammenhangs mit den Zwischengrößen kann die virtuelle Trajektorie auch derart bestimmt werden, dass die Zwischengröße/n entlang der Trajektorie einen vorbestimmten Wert einnimmt/einnehmen oder in einem vorbestimmten Werteintervall liegt/liegen. Rein beispielhaft kann die virtuelle Trajektorie also derart bestimmt werden, dass entlang der Trajektorie ein Abstand zwischen Werkzeug und Bauteil (Oberfläche) einem vorbestimmten Wert entspricht oder in einem vorbestimmten Werteintervall liegt. Es ist natürlich möglich, dass bei der Bestimmung der virtuellen Trajektorie auch sich verändernde Wirkparameter berücksichtigt werden, beispielsweise aufgrund einer Änderung einer Werkzeugeigenschaft.

Mit anderen Worten kann die Planung der virtuellen Trajektorie derart erfolgen, dass der/die Wirkparameter entlang der Trajektorie einen vorbestimmten Wert aufweisen oder in einem vorbestimmten Werteintervall liegen, wobei hierfür mindestens eine der folgenden Größen, insbesondere ein zeitlicher Verlauf der Größe, bestimmt werden kann:
- die Pose des Werkzeugs und/oder des Bauteils,
- eine Zwischengröße,
- eine Werkzeugeigenschaft.

Die virtuelle Trajektorie kann auch das kinematische Modell der Positioniereinrichtung(en) berücksichtigen und insbesondere derart bestimmt werden, dass vorab festgelegte unerwünschte Zustände, z.B. singuläre Zustände, der Positioniereinrichtung(en) vermieden werden. Ein singulärer Zustand bezeichnet einen Zustand, in dem eine Bewegungsfreiheit der Positioniereinrichtung eingeschränkt ist, beispielsweise weil eine Bewegung entsprechend mindestens einem Freiheitsgrad nicht (mehr) möglich ist.

Die Planung der virtuellen Trajektorie kann in Form einer insbesondere iterativen Pfadsuche unter Berücksichtigung der genannten Kriterien erfolgen.

In einem Übertragungsschritt werden Informationen über die virtuelle Trajektorie, insbesondere in Form von Daten, an eine Steuereinrichtung der Positioniereinrichtung(en) übertragen. Die Übertragung kann hierbei drahtgebunden oder drahtlos erfolgen. Die Informationen können in Form von Daten übertragen werden. Die Steuereinrichtung kann eine Recheneinrichtung sein. Diese kann Steuersignale für (einen) Aktor(en) der Positioniereinrichtung(en) erzeugen, insbesondere um (einen) Endeffektor(en) zu bewegen. Hierbei wird also die virtuelle Trajektorie des Werkzeugs relativ zum Bauteil in eine reale Trajektorie umgesetzt. Auch kann die Steuereinrichtung einstellbare Eigenschaften des Werkzeugs, z.B. mindestens einen Betriebsparameter, einstellen. Mit anderen Worten kann die Steuereinrichtung einen Betrieb aller Komponenten steuern, die die Bearbeitung der Oberfläche beeinflussen können.

In einem Steuerschritt erfolgt ein Steuern der zumindest einen Positioniereinrichtung entsprechend den Informationen über die virtuelle Trajektorie zur Bearbeitung der Oberfläche des Bauteils.

Selbstverständlich ist es möglich, dass mehrere virtuelle Trajektorien im Planungsschritt bestimmt werden, insbesondere um die gesamte Oberfläche des Bauteils oder einen vorbestimmten Teil dieser Oberfläche zu bearbeiten. In diesem Fall können die mehreren virtuellen Trajektorien Teiltrajektorien einer Gesamttrajektorie sein. Zwischen den verschiedenen Teiltrajektorien kann keine Bearbeitung der Oberfläche erfolgen. Insbesondere kann eine Endpose einer ersten Teiltrajektorie nicht der Anfangspose einer folgenden Teiltrajektorie entsprechen.

Durch Nutzung der virtuellen Umgebung und durch Bestimmen einer virtuellen Trajektorie ergibt sich in vorteilhafter Weise eine zeitlich schnelle Bestimmung einer Trajektorie, die eine zuverlässige und möglichst vollständige Bearbeitung der Oberfläche ermöglicht. Sowohl die Planung als auch die nachfolgende Bearbeitung kann in weiter vorteilhafter Weise automatisiert, also ohne Nutzerinteraktion, erfolgen, insbesondere vollautomatisiert. In weiter vorteilhafter Weise ergibt sich, dass Oberflächen von unbekannten Bauteilen zuverlässig bearbeitet werden können.

Die Nutzung der virtuellen Umgebung ermöglicht ebenfalls in vorteilhafter Weise eine Berücksichtigung von Daten aus unterschiedlichen Quellen, nämlich aus der dreidimensionalen Erfassung sowie vorbekannten Daten, die z.B. das Werkzeug und die Positioniereinrichtung(en) repräsentieren. Hierdurch ist ein entsprechendes System zur Bearbeitung der Oberfläche unabhängig von einem tatsächlich verwendeten Bauteil-Erfassungsverfahren, insbesondere ist die Verwendung verschiedener Erfassungseinrichtungen möglich.

Insbesondere im Vergleich zu Teaching-basierten Verfahren für die Trajektorienplanung ergibt sich ein verringernder Zeitaufwand für die Bestimmung der Trajektorie. Dies wird insbesondere ermöglicht, da sowohl das zu bearbeitende Bauteil als auch die zur Bearbeitung verwendeten Komponenten im Arbeitsraum der Positioniereinrichtung virtuell abgebildet werden, wodurch die Realität simulierbar ist. Dies ermöglicht auch eine bessere Wartbarkeit eines realen Systems zur Oberflächenbearbeitung und Fehlersuche bzw. -behandlung.

Somit wird ein Verfahren zur insbesondere autonomen effizienten Oberflächenbearbeitung beliebiger unbekannter Objekte mit beliebigen Objektgeometrien geschaffen, welche die Bearbeitung ohne Anwender-Intervention und Vorwissen ermöglicht. Insbesondere ist es nicht erforderlich, dass vorbekannte geometrische Daten, z.B. CAD-Daten, vorliegen. Auch ein z.B. durch Nutzer durchgeführtes Teaching-Verfahren für die Positioniereinrichtung ist nicht erforderlich.

In einer weiteren Ausführungsform ist/sind in der virtuellen Umgebung zusätzlich zumindest eine weitere Positioniereinrichtung und/oder mindestens ein Zusatzobjekt repräsentiert. Z.B. können Bewegungslimitierungen durch Zusatzobjekte, insbesondere durch an Positioniereinrichtungen angebaute Objekte, berücksichtigt werden. Dies und entsprechende Vorteile wurden vorhergehend bereits erläutert.

In einer weiteren Ausführungsform ist die virtuelle Trajektorie eine kollisionsfreie Trajektorie. Dies kann bedeuten, dass die virtuelle Trajektorie derart bestimmt wird, dass entlang der Trajektorie keine Kollision auftritt. Eine Kollision kann beispielsweise detektiert werden, wenn zwei Objektpunkte der virtuellen Umgebung, die verschiedene Abschnitte eines Objektes oder die Abschnitte verschiedener Objekte repräsentieren, aufeinander liegen bzw. ihre Position nicht mehr als ein vorbestimmtes Maß voneinander abweicht. Ist die virtuelle Umgebung eine voxelbasierte Umgebung, so kann eine Kollision detektiert werden, wenn in einen Voxel verschiedene Abschnitte, also Teilvolumina, eines Objekts oder Abschnitte verschiedener Objekte abgebildet werden. Eine Kollision kann beispielsweise auftreten, wenn ein erstes bewegliches Element der Positioniereinrichtung mit einem weiteren beweglichen Element der Positioniereinrichtung kollidiert (Eigenkollision). Eine Kollision kann aber auch auftreten, wenn ein bewegliches Element der Positioniereinrichtung mit einem weiteren Objekt, welches in der virtuellen Umgebung repräsentiert ist, kollidiert, beispielsweise mit einer weiteren Positioniereinrichtung, dem Bauteil und/oder einem Zusatzobjekt. Mit anderen Worten können vorbekannte Störgeometrien, die ebenfalls in der virtuellen Umgebung repräsentiert sein können, bei der Bestimmung der virtuellen Trajektorie berücksichtigt werden.

Es ist insbesondere möglich, dass für jede Pose entlang der virtuellen Trajektorie eine entsprechende Gelenkstellung der zumindest einen Positioniereinrichtung bestimmt wird, wobei in Abhängigkeit der Gelenkstellung dann die Punkte/Voxel in der virtuellen Umgebung bestimmt werden, die die Positioniereinrichtung repräsentieren, wobei dann für diese Gelenkstellungen jeweils eine gelenkstellungsspezifische Kollisionsprüfung erfolgt. Wird eine Kollision detektiert, so kann eine Neubestimmung der virtuellen Trajektorie oder eines Teils der Trajektorie erfolgen. Hierdurch ergibt sich in vorteilhafter Weise, dass eine sichere Kollisionsvermeidung bei der insbesondere automatisiert durchgeführten Bearbeitung der Oberfläche des Bauteils sichergestellt wird. Insbesondere wird ermöglicht, dass eine Kollision verursachende Hindernisse vollautomatisiert umgangen werden können.

In einer weiteren Ausführungsform erfolgt die Planung der virtuellen Trajektorie unter Berücksichtigung zumindest eines Wirkparameters des Werkzeugs. Dies und entsprechende Vorteile wurden vorhergehend bereits erläutert.

Alternativ oder kumulativ erfolgt die Planung der virtuellen Trajektorie unter Berücksichtigung einer zur Durchführung der Bearbeitung benötigten Zeit. Insbesondere kann die virtuelle Trajektorie derart geplant werden, dass die zur Bearbeitung benötigte Zeit minimiert wird.

Weiter alternativ oder kumulativ erfolgt die Planung unter Berücksichtigung eines zur Durchführung der Bearbeitung zurückgelegten Weges. Insbesondere kann der zur Bearbeitung benötigte Weg, also die Länge der Trajektorie, minimiert werden.

Alternativ oder kumulativ erfolgt die Planung der virtuellen Trajektorie unter Berücksichtigung einer Länge mindestens einer Teiltrajektorie. Insbesondere kann die Planung derart erfolgen, dass die Länge mindestens einer, vorzugsweise aller, Teiltrajektorien einer Gesamttrajektorie maximiert werden.

Weiter alternativ oder kumulativ erfolgt die Planung der virtuellen Trajektorie unter Berücksichtigung von Bewegungsfreiheitsgraden des Werkzeugs, insbesondere derart, dass eine Abweichung von vorhandenen Bewegungsfreiheitsgraden minimiert wird.

Die Planung kann hierbei im Rahmen einer Optimierung erfolgen, wobei eine Kostenfunktion in Abhängigkeit einer Abweichung
- des Wirkparameters von einem Soll-Wert/einem Soll-Bereich und/oder
- der zur Durchführung der Bearbeitung benötigten Zeit von und/oder
- dem zur Durchführung der Bearbeitung zurückgelegten Weg und/oder
- einer Länge einer Teiltrajektorie und/oder
- einer Abweichung von möglichen Bewegungsfreiheitsgraden und/oder
- eines Belastungszustands einer Systemkomponente
bestimmt wird, wobei Optimierungsparameter die Posen entlang der virtuellen Trajektorie bzw. die Gelenkstellung(en) der zumindest einen Positioniereinrichtung des Werkzeugs sind. Weitere Optimierungsparameter können Parameter zur Einstellung von einstellbaren Werkzeugeigenschaften sein.

Eine Systemkomponente kann insbesondere eine Positioniereinrichtung, das Werkzeug, das Bauteil oder ein Zusatzobjekt, insbesondere ein Anbauteil wie z.B. ein Schlauch oder ein Kabel, sein. Ein Belastungszustand kann eine mechanische Belastung, z.B. durch Dehnung, repräsentieren.

Hierdurch ergibt sich in vorteilhafter Weise, dass eine optimierte Bearbeitung erfolgen kann, insbesondere im Hinblick auf das Ergebnis, die benötigte Zeit und den benötigten Energieverbrauch.

In einer weiteren Ausführungsform erfolgt eine weitere Erfassung zeitgleich zur Bearbeitung der Oberfläche. Die weitere Erfassung kann eine Erfassung der Geometrie des Bauteils oder eines Teilabschnitts des Bauteils sein. Diese Erfassung kann auch als Detailerfassung bezeichnet werden. Diese kann mit der Erfassungseinrichtung zur Groberfassung durchgeführt werden. Vorzugsweise erfolgt sie jedoch mit einer davon verschiedenen Erfassungseinrichtung. Insbesondere kann die Detailerfassung mit einer höheren Auflösung als die Groberfassung vor der Bearbeitung erfolgen.

Die weitere Erfassung kann insbesondere eine dreidimensionale Erfassung sein. Es ist aber auch vorstellbar, dass die weitere Erfassung eine zweidimensionale Erfassung ist.

Weiter kann die Planung der zumindest einen virtuellen Trajektorie des Werkzeugs relativ zum Bauteil in der virtuellen Umgebung aktualisiert, also neu bestimmt, werden. Insbesondere kann die virtuelle Repräsentation des Bauteils in Abhängigkeit der Ergebnisse der weiteren dreidimensionalen Erfassung aktualisiert werden. Nach der Aktualisierung dieser virtuellen Repräsentation kann dann die aktuelle Trajektorie, insbesondere wie vorhergehend erläutert, erneut bestimmt werden. Die Aktualisierung kann hierbei ebenfalls während der Bearbeitung, insbesondere also in Echtzeit, erfolgen. Dann können Informationen über die aktualisierte virtuelle Trajektorie an die Steuereinrichtung der Positioniereinrichtung übertragen werden, insbesondere ebenfalls während der Bearbeitung, also z.B. in Echtzeit. Hierdurch ergibt sich in vorteilhafter Weise, dass die Zuverlässigkeit der Bearbeitung erhöht wird. Auch ergibt sich in vorteilhafter Weise, dass eine Betriebssicherheit erhöht werden kann, insbesondere da Kollisionen mit aktualisierten Informationen über die Geometrie des Bauteils sicherer vermieden können. Es ist auch möglich, dass die Ergebnisse der weiteren dreidimensionalen Erfassung zu Dokumentationszwecken gespeichert werden, insbesondere in einer Speichereinrichtung eines Systems zur Bearbeitung der Oberfläche des Bauteils.

Eine zweidimensionale Erfassung während der Bearbeitung der Oberfläche kann durch eine Bilderfassungseinrichtung, wie z.B. eine Kamera, erfolgen. Die Bilderfassungseinrichtung kann eine Einrichtung zur Erzeugung von Farbbildern, insbesondere RGB-Bildern, sein. Solche Abbilder können insbesondere zu Dokumentationszwecken erzeugt und gespeichert werden. Hierdurch ergibt sich in vorteilhafter Weise eine zeitlich schnelle Dokumentation der Bearbeitungsergebnisse.

Es ist möglich, dass sowohl eine dreidimensionale Erfassung zur Aktualisierung der Planung sowie eine zweidimensionale Erfassung zur Dokumentation erfolgt. Diese Erfassungen können mit verschiedenen Erfassungseinrichtungen durchgeführt werden. Eine der, vorzugsweise beide, Erfassungseinrichtungen können hierbei am Endeffektor einer Positioniereinrichtung angeordnet sein.

In einer weiteren Ausführungsform erfolgt nach der Übertragung der Informationen über die virtuelle Trajektorie an die Steuereinrichtung der Positioniereinrichtung eine Prüfung, ob die in der virtuellen Trajektorie festgelegten Posen einstellbar sind. Diese Prüfung kann insbesondere durch die Steuereinrichtung der Positioniereinrichtung durchgeführt werden. Insbesondere kann diese eine Testlauf simulieren, um die Gültigkeit der gesamten Trajektorie zu überprüfen.

Weiter wird ein Warnsignal erzeugt, falls die in der virtuellen Trajektorie festgelegten Positionen nicht einstellbar sind. Das Warnsignal kann z.B. durch eine entsprechende Ausgabeeinrichtung ausgegeben werden, beispielsweise eine Anzeigeeinrichtung zur optischen Ausgabe des Warnsignals, eine akustische Ausgabeeinrichtung zur akustischen Ausgabe des Warnsignals oder eine andere geeignete Ausgabeeinrichtung.

Alternativ oder kumulativ kann eine erneute Bestimmung der virtuellen Trajektorie in der virtuellen Umgebung erfolgen. Hierzu kann beispielsweise das Warnsignal von der Steuereinrichtung an die Recheneinrichtung übertragen werden, die die Planung durchführt. Es ist hierbei bevorzugt, dass die erneute Planung nur für einen Teilabschnitt der gesamten virtuellen Trajektorie erfolgt, nämlich für einen Teilabschnitt, in dem die nicht einstellbaren Posen vorhanden sind. Es ist vorstellbar, dass bei der Planung der virtuellen Trajektorie solche Teilabschnitte detektiert werden, die potenziell nicht einstellbare Posen umfassen. Diese Detektion kann durch die Recheneinrichtung zur Planung der virtuellen Trajektorie erfolgen. Insbesondere kann eine Teiltrajektorie mit potenziell nicht einstellbaren Posen detektiert werden. Dann können, insbesondere vor der finalen Übertragung der Informationen über die Gesamttrajektorie, die Informationen über diese Teilabschnitte/Teiltrajektorie an die Steuereinrichtung der Positioniereinrichtung übertragen werden, wobei diese dann eine Prüfung durchführt, ob die in den Teilabschnitten festgelegten Posen einstellbar sind. Das entsprechende Prüfergebnis kann dann an die Recheneinrichtung zur Planung der virtuellen Trajektorie (zurück) übertragen werden, wobei in Abhängigkeit des Ergebnisses dann eine Neuplanung des Teilabschnitts/der Teiltrajektorie erfolgt oder die Planung der virtuellen Trajektorie fortgesetzt wird, wenn der Teilabschnitt/die Teiltrajektorie akzeptiert wird. Dieser Prozess kann ein iterativer Prozess sein, wobei er z.B. beim Erreichen einer vorbestimmten Iterationsobergrenze abgebrochen wird.

Somit wird ein Hybridsystem aus virtueller und realer Umgebung bereitgestellt, wobei über eine Kommunikation zwischen den Umgebungen der Bearbeitungsprozess optimiert wird. Hierbei wird erst virtuell geplant und optimiert und dann durch die reale Steuereinrichtung geprüft, ob die Trajektorie ausführbar ist und eventuell
dann weiter korrigiert, bis eine finale Trajektorie erreicht ist, mit der dann die Bearbeitung durchgeführt wird. Ein solches System kann als cyber-physisches System bezeichnet werden, wobei ein solches System einen Verbund aus informatischen, softwaretechnischen Komponenten mit mechanischen und elektronischen Teilen umfasst, die über eine Infrastruktur, wie z. B. das Internet, kommunizieren können.

Hierdurch kann insbesondere sichergestellt werden, dass die auf Grundlage der virtuellen Umgebung geplante Trajektorie tatsächlich realisierbar ist. So ist es möglich, dass Parameter eines kinematischen Modells, das für die Planung der virtuellen Trajektorie genutzt wird, nicht mit tatsächlichen Parametern der Positioniereinrichtung übereinstimmen, beispielsweise falls im Rahmen einer Kalibrierung der Positioniereinrichtung abweichende Parameter vom kinematischen Modell bestimmt wurden. Dann kann es möglich sein, dass die in der virtuellen Trajektorie festgelegten Posen tatsächlich nicht von der Positioniereinrichtung eingestellt werden können. Durch die vorgeschlagene Prüfung aber ergibt sich, dass letztendlich zuverlässig und zeitlich schnell eine realisierbare Trajektorie bestimmt werden kann.

In einer weiteren Ausführungsform erfolgt nach oder während einer Bearbeitung eine Bestimmung eines Bearbeitungsergebnisses. Z.B. kann das Bearbeitungsergebnis durch Auswertung der vorhergehend erläuterten weiteren Erfassung bestimmt werden. Hierzu kann die ebenfalls vorhergehend erläuterte Erfassungseinrichtung genutzt werden. Allerdings ist es auch vorstellbar, die Bearbeitung vollständig durchzuführen und nach der Bearbeitung das Bearbeitungsergebnis zu bestimmen. Hierzu kann nach der Bearbeitung eine Erfassung des Bauteils erfolgen, beispielsweise mit einer geeigneten Erfassungseinrichtung, deren Ausgangssignale zur Bestimmung des Bearbeitungsergebnisses dann ausgewertet werden. Soll z.B. das Ergebnis einer Dekontamination geprüft werden, so kann mit einer Strahlungs-Erfassungseinrichtung, beispielsweise einem Szintillationszähler oder einem Dosimeter oder einem Kontaminationsnachweisgerät, geprüft werden, welche Restkontamination nach der Bearbeitung vorhanden ist. Die Erfassung des Bauteils zur Bestimmung des Bearbeitungsergebnisses kann erfolgen, indem die entsprechende Erfassungseinrichtung und das Bauteil relativ zueinander bewegt werden. In diesem Fall kann die Erfassungseinrichtung zur Bestimmung des Bearbeitungsergebnisses an einem Endeffektor der Positioniereinrichtung angeordnet sein oder diesen bilden. Wie vorhergehend erläutert, ist es möglich, dass diese Erfassungseinrichtung ebenfalls in den Endeffektor, der das Werkzeug umfasst oder ausbildet, integriert ist.

Insbesondere kann hierfür entsprechend den vorhergehenden Erläuterungen eine virtuelle Umgebung bereitgestellt werden, in der zumindest eine Positioniereinrichtung für eine Erfassungseinrichtung oder für das Bauteil, die Erfassungseinrichtung und das Bauteil in virtueller Form repräsentiert sind. Das Bauteil kann insbesondere im bereits bearbeiteten Zustand repräsentiert sein, wobei z.B. durch die bereits erfolgte Bearbeitung veränderte Eigenschaften, insbesondere geometrische Eigenschaften, bestimmt werden, insbesondere durch eine Simulation. Dann kann zumindest eine virtuelle Trajektorie der Erfassungseinrichtung relativ zum Bauteil in der virtuellen Umgebung bestimmt werden. Informationen über die virtuelle Trajektorie können dann an die Steuereinrichtung der zumindest einen Positioniereinrichtung übertragen werden, die dann entsprechend den Informationen über die virtuelle Trajektorie zur Erfassung der Bearbeitungsergebnisse gesteuert wird. Somit kann auf die vorhergehenden Erläuterungen verwiesen werden, wobei sich diese anstelle des Werkzeugs auf die Erfassungseinrichtung beziehen. Anstelle von Wirkparametern kann dann bei der Planung mindestens ein Erfassungsparameters berücksichtigt werden. Ein solcher Erfassungsparameter kann z.B. ein Soll-Abstand oder Soll-Abstandsbereich oder ein Soll-Erfassungsbereich auf der Bauteil-Oberfläche sein. Somit kann die Planung derart erfolgen, dass der mindestens eine Erfassungsparameter bei der realen Bewegung eingehalten wird. Auch kann die Planung derart erfolgen, dass ein Überlappen von Erfassungsbereichen in verschiedenen Relativlagen entlang der Trajektorie minimiert wird und/oder jeder Punkt eines planaren Erfassungsbereichs in verschiedenen Relativlagen entlang der Trajektorie einen vorbestimmten Abstand zur tatsächlichen Bauteiloberfläche nicht überschreitet.

Weiter wird in Abhängigkeit des Bearbeitungserfolgsergebnisses ein Bearbeitungserfolgskriterium ausgewertet und es erfolgt eine erneute Bearbeitung, falls das Bearbeitungserfolgskriterium nicht erfüllt ist. Ist beispielsweise ein Kontaminationsgrad nach der Bearbeitung höher als ein vorbestimmter Schwellwert, so kann eine erneute Bearbeitung erfolgen. Für die erneute Bearbeitung kann die Planung zumindest einer virtuellen Trajektorie des Werkzeugs relativ zum Bauteil in der virtuellen Umgebung unter Berücksichtigung des Bearbeitungsergebnisses erfolgen. Beispielsweise ist es möglich, dass die virtuelle Trajektorie derart geplant wird, dass nur die Teilabschnitte des Bauteils bearbeitet werden, in denen keine erfolgreiche Bearbeitung durchgeführt wurde. Hierzu kann das Bearbeitungsergebnis spezifisch für Teilabschnitte oder Teiltrajektorien bestimmt werden.

Selbstverständlich können jedoch auch die vorhergehend erläuterten Aspekte bei der Planung der virtuellen Trajektorie zur erneuten Bearbeitung berücksichtigt werden. Weiter können die Informationen über die virtuelle Trajektorie zur erneuten Bearbeitung an die Steuereinrichtung der mindestens einen Positioniereinrichtung übertragen und die mindestens eine Positioniereinrichtung wird entsprechend den Informationen über die virtuelle Trajektorie zur erneuten Bearbeitung der Oberfläche des Bauteils gesteuert. Hierzu kann auf die vorhergehend getätigten Erläuterungen verwiesen werden. Hierdurch ergibt sich in vorteilhafter Weise eine möglichst vollständig erfolgreiche Bearbeitung des Bauteils, die in vollautomatisierter Weise durchgeführt werden kann.

In einer weiteren Ausführungsform umfasst die Planung der zumindest einen virtuellen Trajektorie die folgenden Schritte:
a. Bestimmen einer Projektionsrichtung,
b. Bestimmung eines zweidimensionalen Abbilds aus den dreidimensionalen Informationen in Abhängigkeit der Projektionsrichtung, wobei bildpunktespezifische Intensitätswerte des Abbilds eine Distanz zwischen dem Werkzeug und einer Bauteiloberfläche entlang der Projektionsrichtung repräsentiert,
c. Bestimmen der zumindest einen virtuellen Trajektorie in Abhängigkeit des zweidimensionalen Abbilds.

Die Projektionsrichtung kann eine Referenzbearbeitungsrichtung sein. Diese Referenzbearbeitungsrichtung kann z.B. eine Bearbeitungsrichtung sein, die sich in einer Referenz-Relativpose zwischen Werkzeug und Bauteil ergibt.

Wird das Werkzeug z.B. mit einer Positioniereinrichtung für das Werkzeug positioniert, so kann die Referenz-Relativpose in Abhängigkeit
a) einer Referenzpose des Werkzeugs bestimmt werden, die sich mit (einer) vorbestimmten Referenz-Gelenkstellung(en) der Positioniereinrichtung für das Werkzeug sowie
b) einer aktuell eingestellten Pose des Bauteils
ergibt. Die Referenzbearbeitungsrichtung kann insbesondere parallel zu einer Raumrichtung des Referenzkoordinatensystems oder parallel zu einer von zwei Achsen des Referenzkoordinatensystems aufgespannten Ebene sein. Ist eine Achse des Referenzkoordinatensystems parallel zur Richtung einer Gewichtskraft orientiert, so kann die Referenzbearbeitungsrichtung senkrecht zu dieser Achse orientiert sein.

Wird das Bauteil mit einer als Drehtisch ausgebildeten Positioniereinrichtung positioniert, so kann die Referenzbearbeitungsrichtung senkrecht zu einer Drehachse des Drehtischs sein. Ist die Positioniereinrichtung für das Bauteil ein Drehtisch, so kann die Referenz-Relativpose in Abhängigkeit der aktuell eingestellten Drehstellung des Drehtischs bestimmt werden. Kann das Bauteil in mehrere Drehstelllungen versetzt werden, so kann für jede Drehstellung einer Referenz-Relativpose bestimmt werden.

Insbesondere kann ein zweidimensionales Abbild für jede Relativlage aus einer Menge von Relativlagen erzeugt werden, die sich bei einer Relativdrehung zwischen der Projektionsrichtung und dem Bauteil um eine Hochachse des Bauteils einstellen. Die Hochachse kann parallel zu einer Gravitationsrichtung orientiert sein. Zur Erzeugung der Abbilder kann hierbei (virtuell) die Repräsentation des Bauteils, die Projektionsrichtung oder aber beide, die Repräsentation und die Projektionsrichtung, um diese Hochachse rotiert werden.

Z.B. kann ein Abbild für mindestens zwei, vorzugsweise 8, weiter vorzugsweise mehr als 8, solcher Relativlagen erzeugt werden. Ein Winkelversatz zwischen diesen Relativdrehlagen kann konstant sein und bei 8 Relativlagen z.B. 45° betragen. Für die nachfolgende Bearbeitung mit der abbildspezifischen Trajektorie kann dann diese Relativlage eingestellt zwischen Werkzeug und Bauteil eingestellt werden.

Wird das Bauteil mit einer als Drehtisch ausgebildeten Positioniereinrichtung positioniert, so kann die Hochachse der Drehachse des Drehtisches entsprechen.

Das zweidimensionale Abbild kann als Höhenfeld-Abbild bezeichnet werden. Durch die Berücksichtigung dieses Höhenfeld-Abbilds bei der Planung der virtuellen Trajektorie ergibt sich in vorteilhafter Weise, dass diese örtlich schneller bestimmt werden kann, insbesondere da eine Dimensionsreduktion bei der Bewegungsplanung und Kollisionserkennung erfolgt. Ebenfalls stellt das Höhenfeld-Abbild Informationen bereit, die es insbesondere bei einem Abbruch oder Nothalt der Bearbeitung ermöglichen, das Werkzeug sicher von der Oberfläche des Bauteils zu entfernen.

Mit anderen Worten kann also aus den dreidimensionalen Informationen, die erfasst wurden, ein zweidimensionales Abbild bestimmt werden, wobei die zumindest eine virtuelle Trajektorie in Abhängigkeit des zweidimensionalen Abbilds bestimmt wird.

In einer weiteren Ausführungsform werden einzelne Bildpunkte des zweidimensionalen Abbilds als Bearbeitungsbildpunkte klassifiziert, wobei die zumindest eine virtuelle Trajektorie in Abhängigkeit der Bearbeitungsbildpunkte bestimmt wird.

Bearbeitungsbildpunkte repräsentieren Punkte auf der Oberfläche des Bauteils, die in einem Zentrum eines einstellbaren Bearbeitungsabschnitts liegen. Der einstellbare Bearbeitungsabschnitt bezeichnet einen insbesondere maximalen Abschnitt, der in einer einstellbaren Relativpose zwischen Bauteil und Werkzeug sowie gegebenenfalls einer einstellbaren Werkzeugeigenschaft mit einem vorbestimmten Wirkparameter bearbeitet werden kann. Mit anderen Worten kann also eine Relativpose zwischen Bauteil und Werkzeug sowie gegebenenfalls eine einstellbare Werkzeugeigenschaft derart eingestellt werden, dass der Bearbeitungsabschnitt, insbesondere ein möglichst großer Bearbeitungsabschnitt, mit dem vorbestimmten Wirkparameter bearbeitet werden kann. Somit kann also einem Bearbeitungsbildpunkt eine Relativpose und gegebenenfalls auch eine Werkzeugeigenschaft zugeordnet sein. Der Bearbeitungsabschnitt kann eine Bearbeitungsfläche oder eine Bearbeitungslinie sein. Insbesondere kann die virtuelle Trajektorie derart bestimmt werden, dass bei einer Bewegung entlang der virtuellen Trajektorie die den Bearbeitungsbildpunkten zugeordneten Relativposen eingestellt werden. Hierdurch ergibt sich in vorteilhafter Weise eine einfache Bestimmung der virtuellen Trajektorie.

Weiter vorgeschlagen wird ein System zur Bearbeitung der Oberfläche eines Bauteils. Das System umfasst ein Erfassungsmodul zur dreidimensionalen Erfassung einer Geometrie des Bauteils. Das Erfassungsmodul wiederum kann eine entsprechende Erfassungseinrichtung umfassen. Ebenfalls kann das Erfassungsmodul eine Positioniereinrichtung zur Bewegung der Erfassungseinrichtung umfassen, die der Positioniereinrichtung für das Werkzeug oder für das Bauteil entsprechen, aber auch davon verschieden sein kann.

Weiter umfasst das System ein Simulationsmodul zum Bereitstellen einer virtuellen Umgebung, in der zumindest eine Positioniereinrichtung für das Werkzeug zur Bearbeitung der Oberfläche oder für das Bauteil, das Werkzeug und das Bauteil in virtueller Form repräsentiert sind. Dieses Simulationsmodul kann insbesondere die vorhergehend erläuterte Recheneinrichtung umfassen. Das Erfassungsmodul und das Simulationsmodul können hierbei datentechnisch verbunden sein. Weiter umfasst das System ein Planungsmodul zur Planung zumindest einer virtuellen Trajektorie des Werkzeugs relativ zum Bauteil in der virtuellen Umgebung. Das Simulations- und Planungsmodul können hierbei ein gemeinsames Modul bilden. Somit kann das Planungsmodul ebenfalls die vorhergehend erläuterte Recheneinrichtung umfassen. Allerdings kann das Planungsmodul auch eine davon verschiedene Recheneinrichtung umfassen, insbesondere wenn Simulations- und Planungsmodul separat voneinander ausgebildete Module sind. Auch das Simulationsmodul und das Planungsmodul können datentechnisch verbunden sein. Weiter umfasst das System ein Bearbeitungsmodul, welches zumindest eine Steuereinrichtung und die zumindest eine Positioniereinrichtung umfasst. Die Positioniereinrichtung ist mittels der Steuereinrichtung entsprechend den Informationen über die virtuelle Trajektorie zur Bearbeitung der Oberfläche des Bauteils steuerbar.

Das System ist hierbei konfiguriert, ein Verfahren gemäß einer der in dieser Offenbarung beschriebenen Ausführungsformen auszuführen. Somit kann das System alle notwendigen Elemente/Komponenten zur Durchführung des Verfahrens umfassen.

Wie vorhergehend erläutert, ist es vorstellbar, dass das Werkzeug zur Bearbeitung der Oberfläche eine Erfassungseinrichtung für die erläuterte Groberfassung umfasst. Alternativ oder kumulativ kann das Werkzeug eine Erfassungseinrichtung zur Durchführung der vorhergehend erläuterten weiteren Erfassung des Bauteils während der Bearbeitung umfassen. Alternativ oder kumulativ kann das Werkzeug eine Erfassungseinrichtung zur Erfassung eines Bearbeitungsergebnisses umfassen. Es ist vorstellbar, dass das Werkzeug alternativ oder kumulativ auch eine Absaugeinrichtung zur Absaugung von Bearbeitungsrückständen umfasst.

Es ist vorstellbar, dass das Werkzeug eine Schutzklappe zur Abdeckung der Erfassungseinrichtung(en) umfasst, wobei die Schutzklappe in einem geschlossenen Zustand die Erfassungseinrichtung abdeckt. Die Schutzklappe kann hierbei insbesondere während der Bearbeitung der Oberfläche in den geschlossenen Zustand versetzt werden. Hierdurch ergibt sich in vorteilhafter Weise ein System, welches zur vollautomatischen Bearbeitung einer Oberfläche von Bauteilen mit unbekannten Geometrien geeignet ist.

Die Erfindung wird anhand von Ausführungsbeispielen näher erläutert. Die Figuren zeigen:
- Fig. 1: ein schematisches Blockschaltbild eines erfindungsgemäßen Systems zur Bearbeitung der Oberfläche eines Bauteils,
- Fig. 2: eine schematische perspektivische Darstellung von Teilen eines erfindungsgemäßen Systems,
- Fig. 3: eine beispielhafte Repräsentation eines Bauteils in virtueller Form,
- Fig. 4: eine beispielhafte Repräsentation eines Bauteils in virtueller Form mit einer virtuellen Trajektorie,
- Fig. 5: ein schematisches Flussdiagramm eines erfindungsgemäßen Verfahrens,
- Fig. 6: ein schematisches Flussdiagramm eines erfindungsgemäßen Verfahrens in einer weiteren Ausführungsform und
- Fig. 7: ein schematisches Flussdiagramm eines erfindungsgemäßen Verfahrens in einer weiteren Ausführungsform.

Nachfolgend bezeichnen gleiche Bezugszeichen Elemente mit gleichen oder ähnlichen technischen Merkmalen.

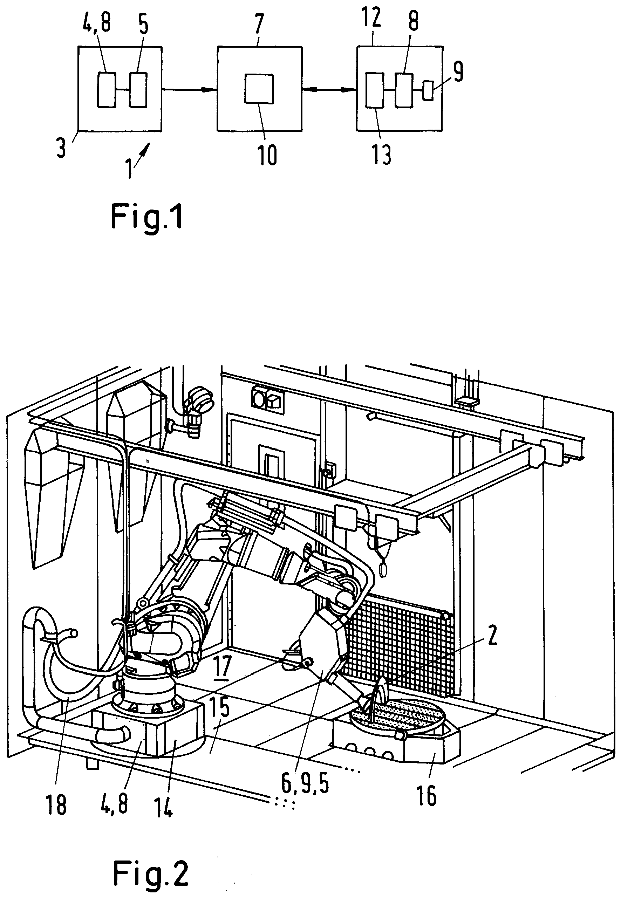

Fig. 1 zeigt ein schematisches Blockschaltbild eines erfindungsgemäßen Systems 1 zur Bearbeitung der Oberfläche eines Bauteils 2 (siehe Fig. 2). Das System 1 umfasst ein Erfassungsmodul 3 zur dreidimensionalen Erfassung einer Geometrie des Bauteils 2, wobei das Erfassungsmodul 3 eine Positioniereinrichtung 4 für eine Erfassungseinrichtung 5 für diese dreidimensionale Erfassung umfasst. Mit der Positioniereinrichtung 4 kann die Erfassungseinrichtung 5 relativ zu dem Bauteil 2 bewegt werden. Die Erfassungseinrichtung 5 kann insbesondere ein Laserscanner sein, insbesondere ein Lasertriangulationsscanner. Dieser ermöglicht in vorteilhafter Weise eine dreidimensionale Erfassung mit einer ausreichenden Genauigkeit sowie ausreichender Scangeschwindigkeit, wobei diese Erfassung als Groberfassung bezeichnet werden kann. Es ist möglich, dass die Erfassungseinrichtung 5 Teil eines Endeffektors 6 (siehe Fig. 2) der Positioniereinrichtung 4 ist. Neben der Erfassungseinrichtung 5 kann dieser Endeffektor 6 auch noch eine weitere Erfassungseinrichtung, beispielsweise einen weiteren Laserscanner, umfassen, die eine weitere dreidimensionale Erfassung insbesondere während der Bearbeitung der Oberfläche ermöglicht, wobei diese Erfassung als Detailerfassung bezeichnet werden kann. Die weitere Erfassungseinrichtung zur dreidimensionalen Erfassung kann insbesondere eine genauere Erfassung der Geometrie ermöglichen. Alternativ oder kumulativ kann der Endeffektor 6 eine Bilderfassungseinrichtung zur Abbildung des Bauteils umfassen, insbesondere zur zweidimensionalen Abbildung. Weiter alternativ oder kumulativ kann der Endeffektor 6 eine Erfassungseinrichtung zur Erfassung eines Bearbeitungsergebnisses umfassen. Weiter kann der Endeffektor 6 eine Recheneinrichtung umfassen, um Ausgangssignale der Erfassungseinrichtungen 5 zu verarbeiten und/oder auszuwerten.

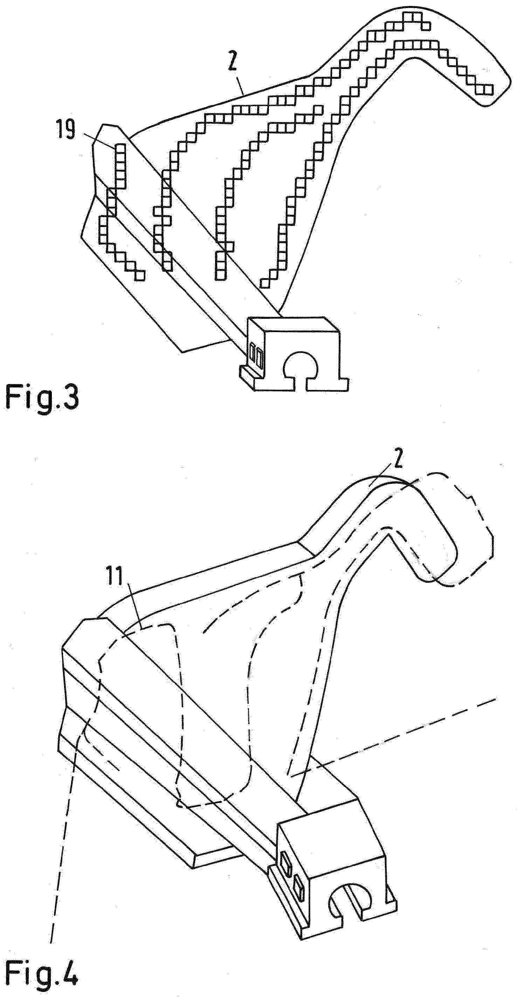

Das erfindungsgemäße System 1 umfasst weiter ein Simulationsmodul 7 zur Bereitstellung einer virtuellen Umgebung. In dieser virtuellen Umgebung kann zumindest eine Positioniereinrichtung 8 für ein Werkzeug 9 zur Bearbeitung der Oberfläche des Bauteils 2 oder für das Bauteil 2, das Werkzeug 9 und das Bauteil 2 in virtueller Form repräsentiert werden. Das Simulationsmodul kann eine Recheneinrichtung 10 umfassen, die die virtuelle Umgebung bereitstellt. Weiter umfasst das erfindungsgemäße System ein Planungsmodul, welches in der in Fig. 1 dargestellten Ausführungsform durch das Simulationsmodul bereitgestellt wird. Es ist jedoch auch vorstellbar, das Simulationsmodul 7 und das Planungsmodul als separate Module auszuführen. Das Erfassungsmodul 3 sowie das Simulationsmodul 7 sind datentechnisch verbunden. Es können somit Daten, die die dreidimensionale Geometrie des Bauteils 2 repräsentieren, genutzt werden, um dieses Bauteil 2 in virtueller Form in der virtuellen Umgebung zu repräsentieren. Ebenfalls können vom Simulationsmodul virtuelle Modelle der Positioniereinrichtung und des Werkzeugs, die beispielsweise vorab bestimmt wurden, zur Repräsentation in virtueller Form genutzt werden. Das Planungsmodul kann zumindest eine virtuelle Trajektorie 11 (siehe Fig. 4) des Werkzeugs 9 relativ zum Bauteil 2 in der virtuellen Umgebung planen bzw. bestimmen. Diese Planung kann unter Berücksichtigung eines kinematischen Modells der Positioniereinrichtung 8 erfolgen. Dieses kinematische Modell kann vorbekannt sein.

Weiter umfasst das erfindungsgemäße System ein Bearbeitungsmodul 12, welches eine Steuereinrichtung 13 und die Positioniereinrichtung 8 für das Werkzeug 9 umfasst. Informationen über die virtuelle Trajektorie 11 können von dem Planungsmodul an das Bearbeitungsmodul 12, insbesondere an die Steuereinrichtung 13, übertragen werden. Die Steuereinrichtung 13 kann dann die Positioniereinrichtung 8 mit dem Werkzeug 9, welches den Endeffektor 6 oder einen Teil des Endeffektors 6 bilden kann, entsprechend den Informationen über die virtuelle Trajektorie 11 zur Bearbeitung der Oberfläche des Bauteils 2 steuern.

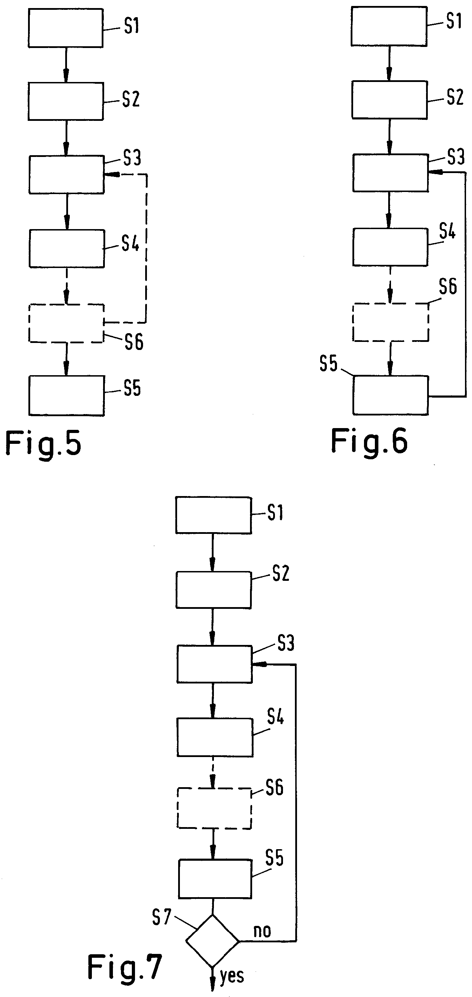

Das in Fig. 1 dargestellte System 1 ist ausgebildet, um ein Verfahren gemäß der in den Figuren 5, 6 oder 7 dargestellten Ausführungsformen zur Bearbeitung der Oberfläche eines Bauteils 2 auszuführen.

Fig. 2 zeigt eine schematische perspektivische Darstellung von Teilen eines Systems 1 (siehe Fig. 1) zur Bearbeitung der Oberfläche eines Bauteils 2. Dargestellt ist eine Positioniereinrichtung 8 für ein Werkzeug 9, welches einen Endeffektor 6 der Positioniereinrichtung 8 bildet. Der Endeffektor 6 umfasst neben dem Werkzeug 9, welches beispielsweise als Wasserstrahlwerkzeug oder als Laserablations-Werkzeug ausgebildet sein kann, auch eine Erfassungseinrichtung 5 zur dreidimensionalen Erfassung einer Geometrie des Bauteils 2. Somit ist die Positioniereinrichtung 8 für das Werkzeug 9 auch eine Positioniereinrichtung 4 für diese Erfassungseinrichtung 5. Die Positioniereinrichtung 8 für das Werkzeug ist als Gelenkarmroboter ausgebildet. Eine Basis 14 des Gelenkarmroboters ist auf einem beweglichen Tisch 15 eines Linearaktors angeordnet. Somit kann der Endeffektor 6 durch die Positioniereinrichtung 8, die diesen Linearaktor umfassen kann, mit sieben Freiheitsgraden im Raum bewegt werden. Durch Einstellung von Gelenkstellungen des Linearaktors sowie der (Dreh-)Gelenke des Gelenkarmroboters kann eine Pose, also eine Position und Orientierung, des Endeffektors 6 im Raum eingestellt werden, insbesondere in Bezug auf ein Referenzkoordinatensystem. Z.B. ist es somit möglich, einen vom Wasserstrahlwerkzeug erzeugten Wasserstrahl auszurichten und mit einer vorbestimmten Orientierung auf die Oberfläche des Bauteils auszurichten.

Das System 1 umfasst zusätzlich eine Positioniereinrichtung 16 für das Bauteil 2, die im dargestellten Ausführungsbeispiel als Drehtisch ausgebildet ist. Selbstverständlich sind auch andere Ausführungsformen einer solchen Positioniereinrichtung 15 vorstellbar. Das zu bearbeitende Bauteil 2 ist hierbei auf einer Oberfläche des Drehtischs angeordnet.

Weiter dargestellt sind Zusatzobjekte in einem Arbeitsraum 17 der Positioniereinrichtung 8 für das Werkzeug 9. Insbesondere erkenntlich sind Versorgungsleitungen 18 zur elektrischen, pneumatischen, hydraulischen und/oder anderweitigen Versorgung des Endeffektors 6. Diese Versorgungsleitungen 18 sind an Elementen, insbesondere beweglichen Elementen, der Positioniereinrichtung 8 befestigt. Werden verschiedene Gelenkstellungen eingestellt, so kann sich auch ein Belastungszustand dieser Versorgungsleitungen 18 ändern, insbesondere ein Dehnungszustand.

Die Bearbeitung der Oberfläche des Bauteils 2 kann erfolgen, indem der Endeffektor 6 durch die Positioniereinrichtung 8 bewegt wird, während das Bauteil 2 stillsteht (oder umgekehrt). Alternativ ist es möglich, dass die Bearbeitung erfolgt, indem der Endeffektor 6 sowie das Bauteil 2 zumindest zeitweise simultan bewegt werden. Auch ist es vorstellbar, dass eine Bewegung des Endeffektors 6 durch die Positioniereinrichtung 8 und eine Bewegung des Bauteils 2 durch die Positioniereinrichtung 16 sequenziell erfolgen. Insbesondere kann die Positioniereinrichtung 16 für das Bauteil 2 getaktet betrieben werden, wobei das Bauteil 2 durch Betrieb der Positioniereinrichtung 16 mit einer vorbestimmten Pose positioniert wird und anschließend der Endeffektor 6 mit der Positioniereinrichtung 8 zur Bearbeitung der Oberfläche bewegt wird, während das Bauteil 2 stillsteht. Nach der Bearbeitung, also im Stillstand des Endeffektors 6, kann dann das Bauteil 2 in einer weiteren Pose positioniert werden, insbesondere durch den Betrieb der Positioniereinrichtung 16.

Fig. 3 zeigt eine schematische Darstellung einer virtuellen Repräsentation eines Bauteils 2. Das Bauteil 2 kann beispielsweise in voxelbasierter Form repräsentiert werden. Fig. 3 zeigt insbesondere ein zweidimensionales Abbild, welches aus einer dreidimensionalen, insbesondere voxelbasierten, Repräsentation des Bauteils 2 in Abhängigkeit einer Projektionsrichtung bestimmt wurde, wobei bildpunktespezifische Intensitätswerte des Abbilds des Bauteils 2 eine Distanz zwischen dem Werkzeug 9 und einer Bauteiloberfläche entlang der Projektionsrichtung repräsentieren. Die Projektionsrichtung kann insbesondere orthogonal zu einer Drehachse des in Fig. 2 dargestellten Drehtisches sein, der eine beispielhafte Ausführungsform der Positioniereinrichtung 16 für das Bauteil 2 ist. Insbesondere kann das Abbild ein posenspezifisches Abbild sein, welches in Abhängigkeit einer aktuellen Relativlage zwischen Werkzeug 9 und Bauteil 2 bestimmt wird.

In Fig. 3 sind als Kästchen schematisch Bearbeitungsbildpunkte 19 dargestellt, die einen Punkt bzw. Abschnitt der Oberfläche des Bauteils 2 in der virtuellen Umgebung repräsentieren bzw. abbilden. Der Übersichtlichkeit halber ist nur ein Bearbeitungsbildpunkt 19 mit einem Bezugszeichen versehen. Es ist möglich, dass die virtuelle Trajektorie 11 (siehe Fig. 4) in Abhängigkeit der Bearbeitungsbildpunkte 19 bestimmt wird. Die Bearbeitungsbildpunkte 19 bilden eine Teilmenge der Menge aller Bildpunkte des zweidimensionalen Abbilds.

Insbesondere ist es möglich, die Bearbeitungsbildpunkte in dem zweidimensionalen Abbild derart zu bestimmen, dass den jeweiligen Bearbeitungsbildpunkten zugeordnete Bearbeitungsabschnitte die abgebildete Bauteiloberfläche vollständig oder mehr als ein vorbestimmtes Maß abdecken. Der Bearbeitungsabschnitt kann ein größtmöglicher Abschnitt auf der Oberfläche mit dem in den Bearbeitungsbildpunkt abgebildeten Punkt bzw. Abschnitt als Zentrum sein, der unter Annahme einer Relativpose zwischen Bauteil und Werkzeug mit einem vorbestimmten Wirkparameter bearbeitet werden kann.

Eine geometrische Form dieses Abschnitts in Abhängigkeit der Relativpose zwischen Bauteil und Werkzeug bestimmt werden. Somit kann die Form des Bearbeitungsabschnitts auch abhängig von verschiedenen Orientierungen der Oberfläche dieses Abschnitts sein.

Es ist z.B. möglich, dass die Bildpunkte des zweidimensionalen Abbilds, insbesondere die Objektbildpunkte, entlang einer vorbestimmten Linie, beispielsweise zeilenweise oder spaltenweise, durchlaufen werden, wobei die Bearbeitungsbildpunkte entlang der Linie derart festgelegt werden, dass mit möglichst wenigen Bearbeitungsbildpunkten die zu bearbeitende Oberfläche durch die den Bearbeitungsbildpunkten zugeordnete Bearbeitungsabschnitte abgedeckt ist, insbesondere vollständig.

Z.B. können die Bildpunkte des zweidimensionalen Abbilds zeilenweise durchlaufen werden und für jede Zeile in Abhängigkeit der Bearbeitungsflächen, die den zeilenspezifischen Bildpunkten zugeordnet sind, die Bearbeitungsbildpunkte in der Zeile derart festgelegt werden, dass eine Bearbeitung des in die Zeile abgebildeten Oberflächenabschnitts mit vorbestimmten Wirkparametern mit möglichst wenigen Bearbeitungsbildpunkten ermöglicht ist. Analog hierzu kann auch eine spaltenweise funktionierende Bestimmung der Bearbeitungsbildpunkte erfolgen.

Dann kann in Abhängigkeit der derart festgelegten Bearbeitungsbildpunkte die virtuelle Trajektorie bestimmt werden, z.B. derart, dass bei einer Bewegung entlang der virtuellen Trajektorie die den Bearbeitungsbildpunkten zugeordnete Relativposen eingestellt werden.

Fig. 4 zeigt eine schematische (und perspektivische) Darstellung eines Bauteils 2 in virtueller Form, wobei ebenfalls eine virtuelle Trajektorie 11 dargestellt ist. Diese virtuelle Trajektorie 11 kann insbesondere in Abhängigkeit der in Fig. 3 dargestellten Bearbeitungsbildpunkte 19 bestimmt werden. Z.B. kann die Trajektorie als die Trajektorie bestimmt werden, die alle in Fig. 3 dargestellte Bearbeitungsbildpunkte 19 verbindet und die kürzeste Länge aufweist. Diese Bestimmung kann im zweidimensionalen Abbild oder in der dreidimensionalen virtuellen Umgebung erfolgen. Es ist möglich, dass die Trajektorie 11 Abschnitte aufweist, entlang derer ein Werkzeug 9 relativ zum Bauteil 2 hin und zurückbewegt wird. In Fig. 4 ebenfalls dargestellt sind Abschnitte der virtuellen Trajektorie 11, die einer Bewegung des Werkzeugs 9 hin zum Bauteil 2 und weg vom Bauteil 2 dienen. Entlang dieser Abschnitte kann die Relativbewegung zeitlich bzw. zeitlich nach der Bearbeitung durchgeführt werden. Z.B. können nach der Bestimmung der Bearbeitungsbildpunkte 19 im zweidimensionalen Abbild diese in den dreidimensionalen Raum transformiert werden und in Abhängigkeit dieser transformierten Punkte kann dann die virtuelle Trajektorie 11 bestimmt werden, wobei die Projektionsparameter und/oder die Wirkparameter berücksichtigt werden können. So können für einen Punkt im zweidimensionalen Abbild in Abhängigkeit der Projektionsparameter dreidimensionale Koordinaten eines Punktes auf der Oberfläche des Bauteils 2 bestimmt werden, insbesondere in der virtuellen Umgebung. Aus der Gesamtheit der derart bestimmten Punkte kann dann die virtuelle Trajektorie 11 bestimmt werden, wobei insbesondere in Abhängigkeit der Wirkparameter für diese Punkt eine einzustellende Relativpose zwischen Bauteil 2 und Werkzeug 9 bestimmt werden kann. Es ist jedoch auch vorstellbar, eine zweidimensionale Trajektorie im zweidimensionalen Abbild zu bestimmen und dann in eine dreidimensionale Trajektorie in der virtuellen Umgebung zu transformieren. In Abhängigkeit dieser dreidimensionalen Trajektorie kann dann unter Berücksichtigung der Wirkparameter die virtuelle Trajektorie 11 bestimmt werden.

Fig. 5 zeigt ein schematisches Flussdiagramm eines erfindungsgemäßen Verfahrens zur Bearbeitung der Oberfläche eines Bauteils 2 (siehe Fig. 2). In einem Erfassungsschritt S1 erfolgt eine dreidimensionale Erfassung einer Geometrie des Bauteils 2 (Groberfassung). Hierzu kann eine Erfassungseinrichtung 5 (siehe Fig. 1) in einem vorbestimmten Abstand von einem Referenzhüllvolumen des Bauteils 2 relativ zu diesem Referenzhüllvolumen bewegt werden. Dies wurde vorhergehend bereits erläutert.

In einem Bereitstellungsschritt S2 wird eine virtuelle Umgebung bereitgestellt, in der zumindest eine Positioniereinrichtung 8, 16 für ein Werkzeug 9 zur Bearbeitung der Oberfläche oder für das Bauteil 2, das Werkzeug 9 und das Bauteil 2 in virtueller Form repräsentiert sind. Hierzu können die Ergebnisse der dreidimensionalen Erfassung aus dem Erfassungsschritt S1 verwendet werden. In einem Planungsschritt S3 wird zumindest eine virtuelle Trajektorie 11 (siehe Fig. 4) des Werkzeugs 9 relativ zum Bauteil 2 in der virtuellen Umgebung geplant. Die Planung kann hierbei derart erfolgen, dass die virtuelle Trajektorie 11 eine kollisionsfreie Trajektorie ist. Insbesondere kann eine Kollision von Elementen der Positioniereinrichtung 8 für das Werkzeug 9 mit dem Bauteil 2 oder anderen Objekten in einem Arbeitsraum 17 der Positioniereinrichtung 8 vermieden werden.

Wie vorhergehend bereits erläutert, kann die Planung zusätzlich zumindest einen Wirkparameter des Werkzeugs 9, eine zur Durchführung der Bearbeitung benötigte Zeit, einen zur Durchführung der Bearbeitung zurückgelegten Weg, eine Länge einer Teiltrajektorie und/oder Bewegungsfreiheitsgrade des Werkzeugs 9 berücksichtigen. So kann die virtuelle Trajektorie 11 beispielsweise derart geplant werden, dass eine dem Werkzeug 9 zugeordnete Hauptbearbeitungsrichtung der Bearbeitung senkrecht zur Oberfläche des Bauteils 2 orientiert ist oder nicht mehr als ein vorbestimmtes Maß von dieser senkrechten Orientierung abweicht. Dies ist insbesondere bei der Verwendung eines Wasserstrahl-Werkzeugs vorteilhaft. Wird als Werkzeug ein Laserablations-Werkzeug zum Abtragen der Oberfläche verwendet, so kann die virtuelle Trajektorie 11 derart geplant werden, dass eine Wirklinie des Laserablations-Werkzeugs auf der Oberfläche senkrecht zur Richtung der Bewegung entlang der virtuellen Trajektorie orientiert ist. Alternativ oder kumulativ kann eine dem Laserablations-Werkzeug zugeordnete Hauptstrahlrichtung derart eingestellt werden, dass diese während der Bewegung nicht senkrecht zur Oberfläche orientiert ist, insbesondere mehr als ein vorbestimmtes Maß von dieser senkrechten Orientierung abweicht, wodurch in vorteilhafter Weise eine Beschädigung des Laserablations-Werkzeugs durch Rückreflexionen vermieden wird. Das Laserablations-Werkzeug kann insbesondere einen fächerförmigen Strahlungsemissionsbereich um die Hauptstrahlrichtung aufweisen, wodurch die Bearbeitung der Oberfläche entlang der Wirklinie erfolgt, deren Länge abhängig von einem Abstand zwischen dem Werkzeug und der Oberfläche des Bauteils ist.

Es ist möglich, aber nicht zwingend, dass die Planung der zumindest einen virtuellen Trajektorie 11 auch einen Belastungszustand von weiteren Systemkomponenten, insbesondere der Positioniereinrichtung 8 für das Werkzeug 9, berücksichtigt. Beispielsweise kann die virtuelle Trajektorie 11 des Werkzeugs 9 derart bestimmt werden, dass ein Belastungszustand der Versorgungsleitungen 18 ein vorbestimmtes Maß nicht überschreitet. Die Planung kann hierbei unter Berücksichtigung und unter Auswertung eines kinematischen Modells der Positioniereinrichtung 8 erfolgen.

Nach Abschluss der Planung können Informationen über die virtuelle Trajektorie 11 an eine Steuereinrichtung 13 übertragen werden, die dann in einem Bearbeitungsschritt S5 die Positioniereinrichtung 8, 16 entsprechend den Informationen über die virtuelle Trajektorie 11 zur Bearbeitung der Oberfläche des Bauteils 2 ansteuert. Hierbei kann nach der Übertragung der Information über die virtuelle Trajektorie 11 in einem Prüfschritt S6 geprüft werden, ob die in der virtuellen Trajektorie 11 festgelegten Posen der Positioniereinrichtung 8 einstellbar sind. Diese Prüfung kann durch die Steuereinrichtung 13 für die Positioniereinrichtung 8 erfolgen.

Fig. 6 zeigt eine schematische Darstellung eines Flussdiagramms eines erfindungsgemäßen Verfahrens gemäß einer weiteren Ausführungsform. Das Verfahren umfasst hierbei im Wesentlichen die Verfahrensschritte der in Fig. 5 dargestellten Ausführungsform. Im Unterschied zu dieser Ausführungsform erfolgt während der Bearbeitung der Oberfläche eine weitere dreidimensionale Erfassung, wobei die Planung der zumindest einen virtuellen Trajektorie 11 des Werkzeugs 9 relativ zum Bauteil 2 in der virtuellen Umgebung aktualisiert wird und wobei dann Informationen über die aktualisierte virtuelle Trajektorie 11 an die Steuereinrichtung 13 der Positioniereinrichtung 8 übertragen werden.

Fig. 7 zeigt ein schematisches Flussdiagramm eines erfindungsgemäßen Verfahrens in einer weiteren Ausführungsform. Das Verfahren gemäß der Ausführungsform in Fig. 7 umfasst im Wesentlichen die gleichen Verfahrensschritte wie die in Fig. 5 dargestellte Ausführungsform des Verfahrens. Im Unterschied zu der in Fig. 5 dargestellten Ausführungsform erfolgt nach einer Bearbeitung eine Bestimmung eines Bearbeitungsergebnisses, wobei in einem Prüfschritt S7 geprüft wird, ob ein Erfolgskriterium erfüllt ist. Falls das Erfolgskriterium nicht erfüllt ist, erfolgt eine erneute Bearbeitung, wobei hierzu die Planung zumindest einer virtuellen Trajektorie 11 des Werkzeugs relativ zum Bauteil 2 in der virtuellen Umgebung unter Berücksichtigung des Bearbeitungsergebnisses erfolgt.

## Patentansprüche

1. Verfahren zur Bearbeitung der Oberfläche eines Bauteils (2), umfassend die Schritte:
a. dreidimensionale Erfassung einer Geometrie des Bauteils (2),
b. Bereitstellen einer virtuellen Umgebung, in der zumindest eine Positioniereinrichtung (8, 16) für ein Werkzeug (9) zur Bearbeitung der Oberfläche oder für das Bauteil (2), das Werkzeug (9) und das Bauteil (2) in virtueller Form repräsentiert sind,
c. Planung zumindest einer virtuellen Trajektorie (11) des Werkzeugs (9) relativ zum Bauteil (2) in der virtuellen Umgebung,
d. Übertragen von Informationen über die virtuelle Trajektorie (11) an eine Steuereinrichtung (13) der zumindest einen Positioniereinrichtung (8, 16),
e. Steuern der zumindest einen Positioniereinrichtung (8, 16) entsprechend den Informationen über die virtuelle Trajektorie (11) zur Bearbeitung der Oberfläche des Bauteils (2).

2. Verfahren nach Anspruch 1, **dadurch gekennzeichnet, dass** die virtuelle Umgebung voxelbasiert bereitgestellt wird.

3. Verfahren nach Anspruch 1 oder 2, **dadurch gekennzeichnet, dass** in der virtuellen Umgebung zusätzlich periphere Elemente der Positioniereinrichtung (8, 16) repräsentiert sind.

4. Verfahren nach einem der vorangegangenen Ansprüche, **dadurch gekennzeichnet, dass** in der virtuellen Umgebung zusätzlich zumindest eine weitere Positioniereinrichtung (16, 8) und/oder mindestens ein Zusatzobjekt repräsentiert ist/sind.

5. Verfahren nach einem der vorangegangenen Ansprüche, **dadurch gekennzeichnet, dass** die virtuelle Trajektorie (11) eine kollisionsfreie Trajektorie ist.

6. Verfahren nach einem der vorangegangenen Ansprüche, **dadurch gekennzeichnet, dass** die Planung der virtuellen Trajektorie (11) unter Berücksichtigung
a. zumindest eines Wirkparameters des Werkzeugs (9) und/oder
b. einer zur Durchführung der Bearbeitung benötigten Zeit und/oder
c. eines zur Durchführung der Bearbeitung zurückgelegten Wegs und/oder
d. unter Berücksichtigung einer Länge mindestens einer Teiltrajektorie und/oder
e. von Bewegungsfreiheitsgraden des Werkzeugs (9) und/oder
f. eines Belastungszustands einer Systemkomponente erfolgt.

7. Verfahren nach Anspruch 6, **dadurch gekennzeichnet, dass** die Planung derart erfolgt, dass die Länge mindestens einer Teiltrajektorie einer Gesamttrajektorie maximiert wird.

8. Verfahren nach einem der vorangegangenen Ansprüche, **dadurch gekennzeichnet, dass** eine weitere Erfassung zeitgleich zur Bearbeitung der Oberfläche erfolgt.

9. Verfahren nach einem der vorangegangenen Ansprüche, **dadurch gekennzeichnet, dass** nach der Übertragung der Informationen über die virtuelle Trajektorie (11) an die Steuereinrichtung (13) der Positioniereinrichtung (8, 16) eine Prüfung erfolgt, ob die in der in der virtuellen Trajektorie (11) festgelegten Posen einstellbar sind, wobei ein Warnsignal erzeugt wird, falls die in der virtuellen Trajektorie (11) festgelegten Posen nicht einstellbar sind.

10. Verfahren nach einem der vorangegangenen Ansprüche, **dadurch gekennzeichnet, dass** nach oder während einer Bearbeitung eine Bestimmung eines Bearbeitungsergebnisses erfolgt, wobei in Abhängigkeit des Bearbeitungsergebnisses ein Bearbeitungserfolgskriterium ausgewertet wird, wobei eine erneute Bearbeitung erfolgt, falls ein Bearbeitungserfolgskriterium nicht erfüllt ist.

11. Verfahren nach einem der vorangegangenen Ansprüche, **dadurch gekennzeichnet, dass** die Planung der zumindest einen virtuellen Trajektorie die folgenden Schritte umfasst:
a. Bestimmen einer Projektionsrichtung,
b. Bestimmung eines zweidimensionalen Abbilds aus den dreidimensionalen Informationen in Abhängigkeit der Projektionsrichtung, wobei bildpunktespezifische Intensitätswerte des Abbilds eine Distanz zwischen dem Werkzeug (9) und einer Bauteiloberfläche entlang der Projektionsrichtung repräsentiert,
c. Bestimmen der zumindest einen virtuellen Trajektorie (11) in Abhängigkeit des zweidimensionalen Abbilds.

12. Verfahren nach Anspruch 11, **dadurch gekennzeichnet, dass** einzelne Bildpunkte des zweidimensionalen Abbilds als Bearbeitungsbildpunkte (19) klassifiziert werden, wobei die zumindest eine virtuellen Trajektorie (11) in Abhängigkeit der Bearbeitungsbildpunkte (19) bestimmt wird.

13. Verfahren nach einem der vorangegangenen Ansprüche, **dadurch gekennzeichnet, dass** in der virtuellen Umgebung eine Erfassungseinrichtung in virtueller Form repräsentiert ist.

14. Verfahren nach einem der vorangegangenen Ansprüche, **dadurch gekennzeichnet, dass** bei der Planung der virtuellen Trajektorie ein kinematisches Modell der mindestens einen Positioniereinrichtung (8, 16) berücksichtigt wird, insbesondere zur Bestimmung von Objekt- und Umgebungsvoxeln für eine Gelenkstellung.

15. System zur Bearbeitung der Oberfläche eines Bauteils (2), umfassend:
a. ein Erfassungsmodul (3) zur dreidimensionalen Erfassung einer Geometrie des Bauteils (2),
b. ein Simulationsmodul (7) zum Bereitstellen einer virtuellen Umgebung, in der zumindest eine Positioniereinrichtung (8, 16) für das Werkzeug (9) oder für das Bauteil (2), das Werkzeug (9) und das Bauteil (2) in virtueller Form repräsentiert sind,
c. ein Planungsmodul zur Planung zumindest einer virtuellen Trajektorie (11) des Werkzeugs (9) relativ zum Bauteil (2) in der virtuellen Umgebung,
d. ein Bearbeitungsmodul umfassend zumindest eine Steuereinrichtung (13) und die zumindest eine Positioniereinrichtung (8, 16), wobei die Positioniereinrichtung (8, 16) mittels der Steuereinrichtung (13) entsprechend den Informationen über die virtuelle Trajektorie (11) zur Bearbeitung der Oberfläche des Bauteils (2) steuerbar ist.
